# EUROPEAN PATENT SPECIFICATION

(11) **EP 1 049 234 B1**
(45) Date of publication and mention of the grant of the patent: **03.01.2007**
(21) Application number: 00108840.0
(22) Date of filing: 26.04.2000
(51) Int. Cl.: H02K 9/19, H02K 11/04

(54) **Drive unit**
Antriebseinheit
Unité d'entraînement

(30) Priority: 27.04.1999 JP 12028699; 15.12.1999 JP 35673499; 24.03.2000 JP 2000088607
(43) Date of publication of application: 02.11.2000
(73) Proprietor: AISIN AW CO., LTD., Anjo-shi, Aichi-ken 444-1192 (JP)
(72) Inventor: Hara, Takeshi, c/o AISIN AW Co., Ltd., Anjo-shi, Aichi-ken, 444-1192 (JP); Hotta, Yutaka, c/o AISIN AW Co., Ltd., Anjo-shi, Aichi-ken, 444-1192 (JP); Takenaka, Masayuki, c/o AISIN AW Co., Ltd., Anjo-shi, Aichi-ken, 444-1192 (JP); Agata, Hiromichi, c/o AISIN AW Co., Ltd., Anjo-shi, Aichi-ken, 444-1192 (JP); Yamaguchi, Kozo, c/o AISIN AW Co., Ltd., Anjo-shi, Aichi-ken, 444-1192 (JP); Kido, Takahiro, c/o AISIN AW Co., Ltd., Anjo-shi, Aichi-ken, 444-1192 (JP); Kutsuna, Naruhiko, c/o AISIN AW Co., Ltd., Anjo-shi, Aichi-ken, 444-1192 (JP)
(74) Representative: TBK-Patent

(56) References cited:
- GB-A- 339 461
- US-A- 5 271 248
- US-A- 5 585 681
- PATENT ABSTRACTS OF JAPAN vol. 013, no. 025 (M-787), 20 January 1989 (1989-01-20) & JP 63 235618 A (MITSUBISHI ELECTRIC CORP), 30 September 1988 (1988-09-30)

## Description

### BACKGROUND OF THE INVENTION

### TECHNICAL FIELD OF THE INVENTION

The present invention relates to a drive unit in which an electric motor is used as a power source, and more particularly, to a cooling technology in a drive unit for an electric vehicle or a hybrid drive unit.

### RELATED ART

When an electric motor is used as a drive source for a vehicle, the load exerted on the electric motor varies significantly according to the running condition. Accordingly, in order to manage the heat generation with a heavy load, cooling is necessary. Therefore, conventionally, there is a technology as disclosed in Japanese Patent Application Laid-Open No. 7-288949 wherein a drive unit case is provided with a water passage for cooling the electric motor with water by passing water through the water passage.

However, according to the construction of the conventional art, due to the fact such construction that the coolant passage is formed by winding the pipe in a spiral groove formed on the outer periphery of a casing, and substantially half of the circular section of the pipe is exposed from the outer peripheral surface of the casing, the structure is complicated, and is disadvantageous in terms of cost and space. Patent specification GB 339 461 discloses a drive unit comprising the features of the preamble of claim 1. The disclosed cooling device for electric motors is essentially composed of a hydraulic radiator mounted on the motor in such a way as to envelope completely the outer surface of the frame of the motor. The radiator is composed of a series of parallel air circulation tubes connected at their ends to two headers communicating with the interior of the motor.

Patent specification US-A-5 271 248 describes a cooling system for a generator eg deployed in aircrafts. An evaporator removes heat from the power converter components and an oil loop removes heat from a generator and a condenser. The condenser is disposed in the generator stator. Also, the oil loop includes a conduit having a plurality of turns disposed about the stator and a heat exchanger.

Both of the arrangements are complicated and provide for cooling only with the drawbacks already mentioned above.

### SUMMARY OF THE INVENTION

Therefore, a first object of the present invention is to provide a drive unit with which the electric motor incorporated in the drive unit case can be cooled efficiently in more simple drive unit case structure.

Meanwhile, an electric motor requires a controller for its control (an inverter in the case of an alternating current electric motor). Since the controllers such as an inverter are connected to an electric motor with a power cable, they can be set in a proper position by being separated from the electric motor. However, for convenience of loading on a vehicle, there are cases where such controllers are integrated with the electric motor. Thus, when the controller is integrated with the electric motor, the controller sustains not only temperature rise due to the heat generated by its own elements but also heat of the electric motor through a drive unit case. Therefore, controllers require cooling.

Thus, a second object of the present invention is to provide a drive unit such that, even in the case of integrating the inverter with the drive unit case, both the inverter and the electric motor can be effectively cooled.

In order to attain the first and second object as above, the present invention comprises the features of claims 1.

Also, in the above construction, it is more effective to adopt a construction wherein the heat exchange portion is disposed downstream of the cooling portion of the inverter in the circulation passage for the second coolant.

It is more effective in the above construction to adopt a construction wherein isolating means for defining the first chamber facing the partition wall side and for defining the second chamber facing the circulation passage side is provided in the flow passage for the second coolant, and the first chamber and the second chamber are mutually communicated the upstream side in the circulation passage for second coolant being the first chamber and the downstream side thereof being the second chamber.

Also, in the above construction, the construction may be such that isolatingmeans for defining the first chamber facing the partition wall side and the second chamber facing the circulation passage side for the first coolant is provided in the flow passage for the second coolant, and the first chamber and the second chamber are connected in parallel to the circulation passage for the second coolant.

Furthermore, in any of the above constructions comprising the partition wall, it is effective to adopt a construction wherein the drive unit has an electric generator and a circulation passage for the first coolant for cooling the generator in a drive unit case and further comprises an inverter for controlling the electric generator, the inverter being fixed to the partition wall.

It is also effective to adopt such a construction that, in a construction wherein the flow passage for the second coolant is formed by using the cooling portion of the inverter for the electric motor between the abovementioned partition wall and the circulation passage for the first coolant, the drive unit case has a coolant container for the first coolant at a position facing the flow passage for the second coolant

It is more effective to adopt a construction that, in the construction having the coolant container for the first coolant, the coolant container is divided into one for the electric motor and one for the electric generator.

Further, it is also effective to take a construction provided with an orifice for distributing the supply proportions to both coolant containers in the flow passage for the first coolant leading to the coolant container for the electric motor and the coolant container for the electric generator.

It is also effective to take a construction wherein the coolant container has a dam in the vicinity of its exit.

There can be a construction wherein the coolant container is defined by a stator of the electric motor or the electric generator.

Further, it is effective to take a construction wherein the circulation passage for the first coolant has a flow passage passing through a rotor for the electric motor downstream the coolant container, and the flow passage is terminated at a discharge hole provided in the rotor.

In the construction by using as the first coolant a lubricant oil, ATF (automatic transmission fluid) which does not to give ill effect of corrosion or the like to the electric motor, very efficient heat transfer can be made through direct contact between the electric motor and the coolant, and moreover, the heat conveyed to the coolant by heat transfer can be discharged efficiently to the second coolant at one heat exchange portion. Accordingly, the motor can be cooled efficiently without complication of the circulation passage for the first coolant passing through the drive unit case.

The first coolant for cooling the electric motor is cooled by the second coolant for cooling the inverter which is required for the electric motor control. In such cooling structure, the second coolant for cooling the inverter is also used for the cooling of the electric motor, thereby making it possible to make synthetic simplification of the cooling structure of the drive unit.

Next, according to the construction described in claim 2, it is possible to prevent the heat of the first coolant which cooled the electric motor from being transferred to the inverter whose heat resistant temperature is lower than that of the electric motor.

Because the system is such that the second coolant does not directly cool the electric motor but simultaneously cools the inverter the first coolant which cools the motor by circulation, the heat from the electric motor is reduced with respect to direct heat transfer by heat exchange to the second coolant through the first coolant, and thus it is possible to prevent the temperature rise of the second coolant from rising above the heat resistant temperature of the inverter.

Next, in the construction described in claim 4, the coolant does not simultaneously cool the electric motor and the inverter. Instead, it first cools the inverter through the partition wall and then cools the electric motor through the drive unit case. Therefore, it becomes possible to conduct cooling according to the cooling temperature requirements of the respective inverter and electric motor by a single coolant. Thus, it is possible to cool both the inverter and the electric motor efficiently by a simple flowpassage construction. Also, since the space between the integrated inverter and the drive unit case is used as a space for disposing the flow passage for coolant for cooling the inverter and the electric motor, it is possible to avoid a complicated construction such as that of conventional technology in which a coolant passage for exclusive use around the drive unit case, thereby leading to an improvement in space efficiency and a reduction in cost.

Also, according to the construction described in claim 5, because the coolant flows respectively independently to the first chamber and the second chamber, it is possible to cool the inverter simultaneously with the motor, and further it is possible to prevent the heat from the electric motor from being transferred to the inverter.

In the construction as described in claim 6, the second coolant does not directly cool the electric motor and the electric generator but cools simultaneously the inverter and the first coolant for cooling the electric motor and the electric generator by circulation. Accordingly, the heat from the electric motor and the electric generator is reduced with respect to direct heat transfer by heat exchange to the second coolant through the first coolant, and thus it is possible to prevent the temperature of second coolant from rising above the heat resistant temperature of the inverter.

It is possible that the coolant does not simultaneously cool the inverter, the electric motor and the electric generator. Instead, it first cools the inverter through the partition wall and then cools the electric motor and the electric generator through the drive unit case. Therefore, it becomes possible to conduct cooling according to the cooling temperature requirements of the respective inverter, electric motor, and electric generator, with a single coolant. Thus, it is possible to cool the inverter, the electric motor, and the electric generator efficiently with a simple flow passage construction. Also, since the space between the integrated inverter and the drive unit case is used as a space for disposing the flow passage for coolant for cooling the inverter, the electric motor, and the electric generator, it is possible to avoid a complicated construction such as that of conventional technology in which a coolant passage for exclusive use is provided around the drive unit case, thereby leading to an improvement in space efficiency and reduction in cost.

If the coolant flows respectively independently to the first chamber and the second chamber, it is possible to cool the inverter simultaneously with the electric motor and the electric generator, and further it is possible to prevent the heat from the electric motor and the electric generator from being transferred to the inverter.

In the construction described in claim 7, by providing a coolant container in the circulation passage for first coolant, it becomes easy to secure heat transfer area in the heat exchange portion with the second coolant, realizing a sufficient heat exchange between the first coolant and the second coolant improving heat exchange efficiency thereby.

Furthermore, in the construction as described in claim 8, by separating the coolant container into one for the electric motor use and one for the electric generator use, it becomes possible to individually adjust the coolant amount to be supplied to the respective electric motor and electric generator from the coolant container. Accordingly, by making adjustments with orifice or the like, it is possible to supply a proper amount of coolant to the electric motor and the electric generator, thereby effectively cooling them according to their respective cooling temperature requirements.

In the construction described in claim 9, it is possible to distribute and supply a proper amount the first coolant to the respective coolant containers of the electric motor and the electric generator, and thereby effectively cooling the electric motor and the electric generator in accordance with the respective heat loads.

Also, in the construction described in claim 10, it is possible to constantly maintain a fixed amount of the first coolant in a coolant container by means of a dam, which enables sufficient heat transfer to the first coolant, thereby further improving heat exchange efficiency.

According to the construction described in claim 11, because it is possible to bring the first coolant into direct contact with the stator of the electric motor or the electric generator without being mediated by the drive unit case, the electric motor or the electric generator can be cooled more effectively.

According to the construction described in claim 12, the rotor of the electric motor can be cooled using the first coolant in the coolant container after heat exchange. Moreover, it becomes possible to cool the stator using the first coolant discharged from the rotor. Therefore, it is possible to conduct efficient cooling of the electric motor in which the circulation of the first coolant can be effectively utilized to the utmost extent.

### BRIEF DESCRIPTION OF THE DRAWING

Fig. 1 is a schematic diagram of a first embodiment in which the basic concept of the present invention has been embodied.
Fig. 2 is a system construction diagram of a second embodiment in which the present invention has been further embodied and applied to a hybrid drive unit.
Fig. 3 is a side view showing the axial position relationship of the drive unit of the second embodiment.
Fig. 4 is a circuit diagram showing a hydraulic system of the drive unit of the second embodiment.
Fig. 5 is a perspective view showing the appearance of a drive unit with an integrated inverter of the second embodiment.
Fig. 6 is a schematic diagram showing conceptually a cooling system in the second embodiment.
Fig. 7 is an exploded view showing the detailed construction of the second embodiment viewed from above.
Fig. 8 is an exploded view showing a part of the constituting members shown in Fig. 7 viewed from below.
Fig. 9 is a sectional view showing the detailed construction of the second embodiment.
Fig. 10 is a sectional view taken along the line I-I of Fig. 9.
Fig. 11 is a schematic diagram showing conceptually a cooling system of a third embodiment of the present invention.
Fig. 12 is a schematic diagram showing conceptually a cooling system of a fourth embodiment of the present invention.
Fig. 13 is a schematic sectional view showing conceptually a fifth embodiment of the present invention.
Fig. 14 is a schematic diagram showing conceptually a cooling system of the fifth embodiment.
Fig. 15 is a schematic sectional view showing conceptually a sixth embodiment of the present invention.
Fig. 16 is a sectional view taken along II-II of Fig. 15.

### EMBODIMENTS OF THE INVENTION

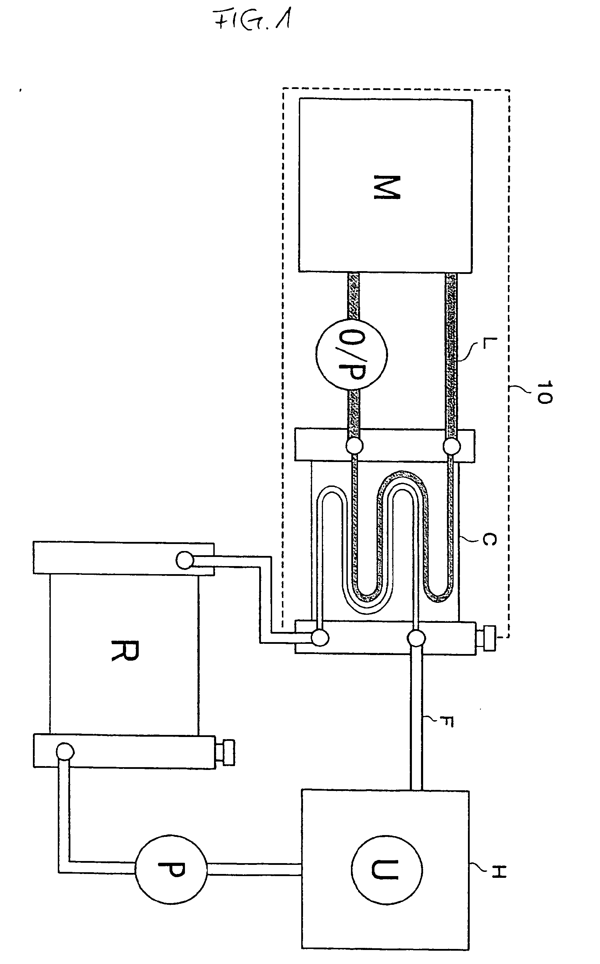

Hereinafter, embodiments of the present invention will be explained with reference to the drawings. Firstly, Fig. 1 schematically shows a first embodiment of the present invention. This drive unit comprises an electric motor M and a circulation passage L for a first coolant (in this embodiment, oil) for cooling the electric motor M, in a drive unit case 10. Provided separately is a circulation passage F for a second coolant (in this embodiment, cooling water) different from the circulation passage L for the first coolant. The circulation passage F for a second coolant has a heat exchange portion (in this embodiment, oil cooler) C with the circulation passage L for the first coolant, and the first coolant for cooling the motor M is cooled by the heat transfer to the second coolant at the heat exchange portion C.

In this configuration, the drive unit is provided with an inverter U for controlling the motor M, so that a cooling circuit for cooling the inverter U is utilized as a circulation passage F for the second coolant. The circulation passage F for the second coolant has a cooling portion H for cooling the inverter U. To this cooling circuit there is inserted a radiator R for cooling the second coolant. In this specification, the inverter means a power module comprising a switching transistor for converting the direct current for battery power source into a switching transistor (three phase alternating current in the case of a three phase alternating current electric motor) or accessory circuit elements, and a circuit substrate having an arrangement thereof. The oil cooler C functioning as the heat exchange portion is disposed downstream of the cooling portion H of the inverter U in the circulation passage F for he second coolant. In the figure, an abbreviation O/P denotes an oil pump, and P denotes a water pump.

In the drive unit having such construction, by using oils such as lubricant oil and ATF (automatic transmission fluid) which do not have ill effect such as corrosion on the motor M as the first coolant, it is possible to carry out heat transfer efficiently by the direct contact between the motor M and the oil, and yet, the heat transferred to the oil by heat transfer can be discharged efficiently to the cooling water as the second coolant at one heat exchange portion C. Thus, without making the circulation passage L for oil passing through the drive unit case 10 complicated, the motor M can be cooled efficiently. Furthermore, because the oil cooler C is disposed downstream of the cooling portion H of the inverter U, it is possible to prevent the heat of the oil which has cooled the motor from being transferred to the inverter U which has the lower heat resistant temperature than the motor.

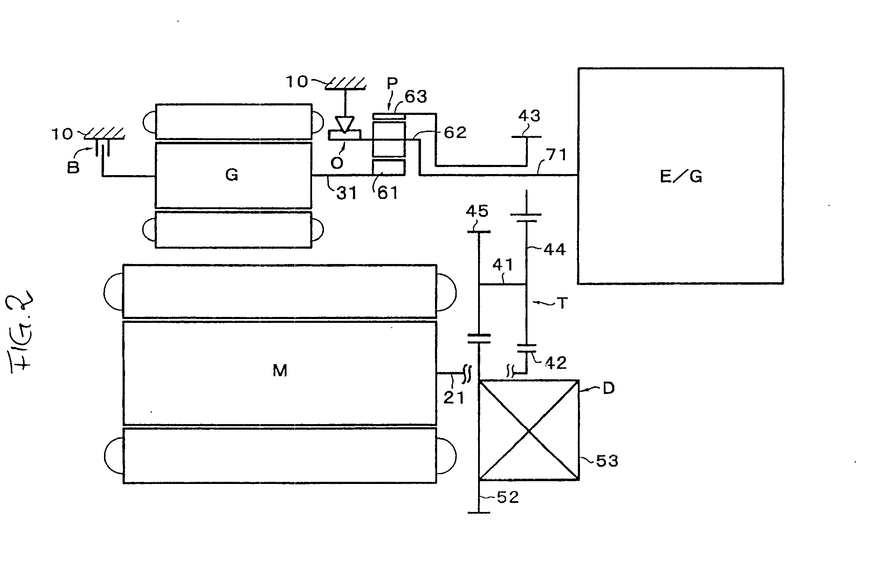

Next, a second embodiment in which the present invention has been further embodied will be described. Fig. 2 shows a system construction in the case where the present invention is applied to a hybrid drive unit. This unit has, as the principal construction elements, an internal combustion engine (hereinafter referred to as engine) E/G, an electric motor (hereinafter referred to as motor) M, an electric generator (hereinafter referred to as generator) G, and a differential D, with a planetary gear set P of a single pinion construction and a counter gear mechanism T being interposed between them. Furthermore, a one-way clutch O and a brake B are also provided.

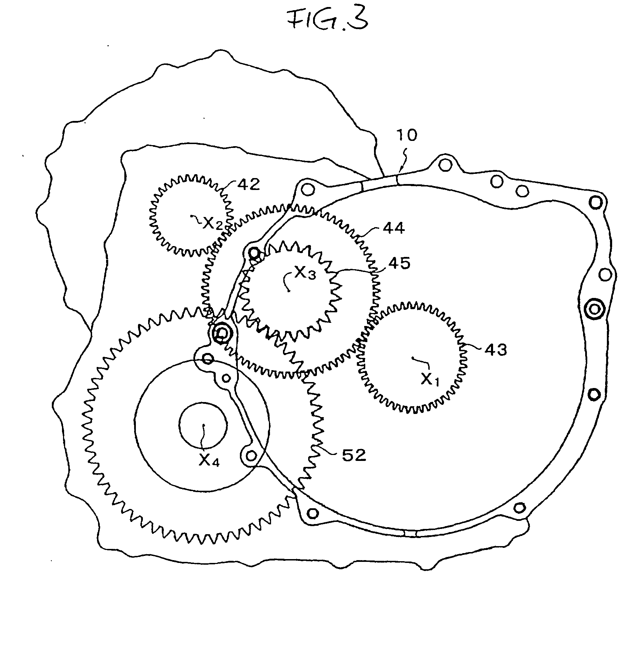

As illustrated by the actual positional relationship of the axes in Fig. 3, the drive unit is of a four-axial construction in which the engine E/G and the generator G are located on a first axis X₁, the motor M is located on a second axis X₂, the counter-gear mechanism T is located on a third axis X₃, and the differential D is located on a fourth axis X₄, respectively. And, the engine E/G and the generator G are connected with the differential D through the planetary gear set P and the counter gear mechanism T. The motor M is connected with the differential D through the counter gear mechanism T.

The motor M is connected with the counter gear mechanism T by meshing a counter drive gear 42 fixed to a rotor shaft 21 of the motor M with a counter driven gear 44. The engine E/G is connected with the generator G and the counter gear mechanism T by connecting its output shaft 71 with a carrier 62 of the planetary gear set P. The generator G is connected to the engine E/G and the counter gear mechanism T by connecting its rotor shaft 31 with a sun gear 61 of the planetary gear set P. A ring gear 63 of the planetary gear set P is connected with a counter drive gear 43 on the first axis X₁ meshing with the counter driven gear 44 of the counter gear mechanism T. The counter gear mechanism T is of a construction having a counter driven gear 44 fixed to a counter shaft 41, and a differential drive pinion gear 45. The differential drive pinion gear 45 meshes with a differential ring gear 52 fixed to a differential case 53 of the differential D. The differential D is connected with the wheels (not shown) as is common knowledge.

The one-way clutch O is arranged with its inner race connected to the carrier 62 and the outer race connected to the drive unit case 10 so as to prevent reverse rotation of the carrier 62 by reactive force with a drive unit case 10. Also, the brake B is provided so as to secure the rotor shaft 31 of the generator G with the drive unit case 10 when necessary to prevent drive loss due to it rotating by the reaction torque when electric generation is unnecessary. The brake B is arranged so that a brake hub is connected with the rotor shaft 31, and a friction engaging member engages with the brake hub and the drive unit case 10.

In the drive unit of this type of construction, though there is a speed reduction relationship by a gear ratio portion by the counter gear mechanism T between the motor M and the wheels, they are directly connected in terms of motive force transmission. In contrast, the engine E/G and the generator G are connected together indirectly in terms of motive force transmission through the planetary gear set P and counter gear mechanism T. As a result, by adjusting the generation load of the generator G with respect to the ring gear 63 which sustains the vehicle running load through the differential D and the counter gear mechanism T, running with an appropriately adjusted ratio utilizing the engine output for the driving force and the generation energy (battery charging) becomes possible. Also, because the reactive force applied to the carrier 62 is reversed by driving the generator Gas a motor, the force functions as a reactive force element for retaining the carrier 62 with the drive unit case 10 through the one-way clutch O at that time so that the output of the generator G can be transmitted to the ring gear 63, thereby making it possible to strengthen the driving force at vehicle take-off by simultaneous output of the motor M and the generator G (running in parallel mode).

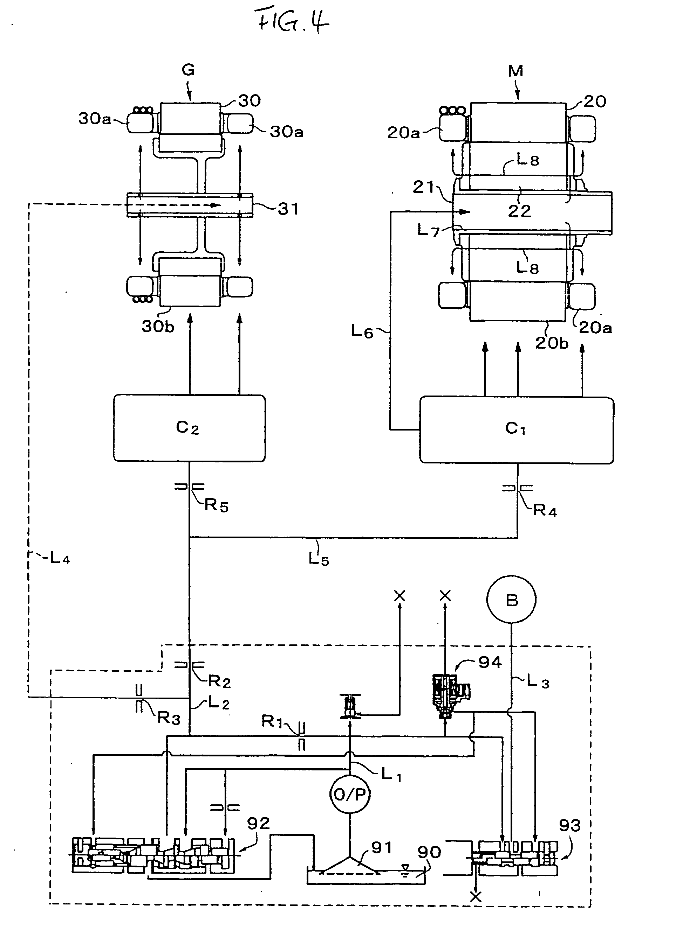

Next, Fig. 4 shows a hydraulic circuit construction of the hybrid drive unit. This circuit is provided with an oil sump 90 utilizing the bottom of the drive unit case 10, an electric oil pump O/P which sucks up oil through a strainer 91 from the oil sump 90 and which discharges it in the circuit, a regulator valve 92 which generates circuit line pressure, a brake valve 93 for controlling engagement/disengagement of the brake B, and a solenoid valve 94 for controlling switching of the brake valve 93, as the major elements. Thus, this circuit is constructed as a control circuit for feeding oil to the circulation passage supply oil passage L₂ as a coolant for cooling the motor M and the generator G and as a lubricant, and for controlling communication of a hydraulic servo supply oil passage L₃ of the brake B to the line pressure oil passage L₁ and drain communication.

The line pressure oil passage L₁ on the discharge side of the oil pump O/P is branched, with one branch connected to the supply oil passage L₂ of the circulation passage through the regulator valve 92, and the other branch connected to the supply oil passage L₃ of the hydraulic servo of the brake B through the brake valve 93. The line pressure oil passage L₁ and the supply oil passage L₂ are connected together through an orifice R₁. The supply oil passage L₂ of the circulation passage is branched, with the respective branches passing through orifices R₂, R₃. One branch is connected to the oil passage in rotor shaft 31 of the generator G through an oil passage L₄ in the case shown by the broken line, and the other branch is further branched at an oil passage L₅ in the case, and they are connected to an oil container C₁ for the motor M and an oil container C₂ for the generator G provided in the upper part of the drive unit case through orifices R₄, R₅, respectively.

With cooling of the motor M, oil led to an oil passage L₇ in the rotor shaft 21 from the coolant container C₁ through an oil passage L₆ in the case passes through an oil passage L₈ in the rotor 22, the detailed oil passage structure of which will be illustrated later with reference to the sectional structure, and is discharged by centrifugal force generated by the rotation of the rotor 22 toward a coil end 20a of the stator 20 from the end of the oil passage. In this way, by passing through the oil passage in the rotor 22, the rotor side is cooled. Further, cooling is done by the oil discharged from both ends of the rotor 22 being blown to the coil end 20a at both ends of the stator 20 and by the oil discharged direct from the coolant container C₁ being blown to a stator core 20b and the coil end 20a. In the same manner, cooling of the generator G is done by the oil discharged by centrifugal force from the oil passage in the rotor shaft 31 of the generator G through the radial directional oil hole being blown to the coil end 30a at both ends of the stator 30 and by the oil discharged from the coolant container C₂ being blown to the stator core 30b and coil end 30a. In this way, the oil which has thus cooled the motor M and the generator G and which has risen in temperature due to heat exchange drops into the bottom part of the drive unit case or runs down along the case wall so as to be recovered in the oil sump 90 disposed underneath the drive unit.

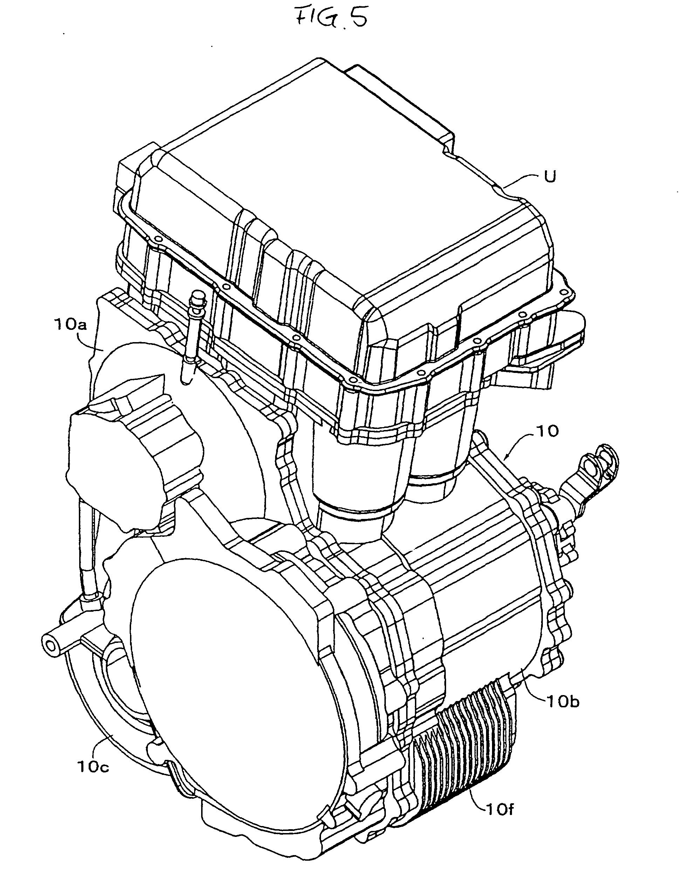

Fig. 5 is a perspective view of an appearance of the drive unit. A construction is employed in which are provided a large number of heat radiation fins 10f formed integrally with the case 10 on the outer wall of the drive unit case 10 made of an aluminum material or the like lying outside the oil sump, such that the oil recovered in the oil sump is air cooled with air-flow in the engine room. In Fig. 5, a reference numeral 10a denotes a motor accommodating portion in the drive unit case, 10b denotes a generator accommodating portion, and 10c denotes a differential accommodating portion. An inverter U for controlling the motor and the generator (hereinafter referred to as inverter, a general term for inverter for motor and inverter for generator) are, as shown in Fig. 5, mounted on the upper part of the drive unit case 10 and integrated with the drive unit case 10.

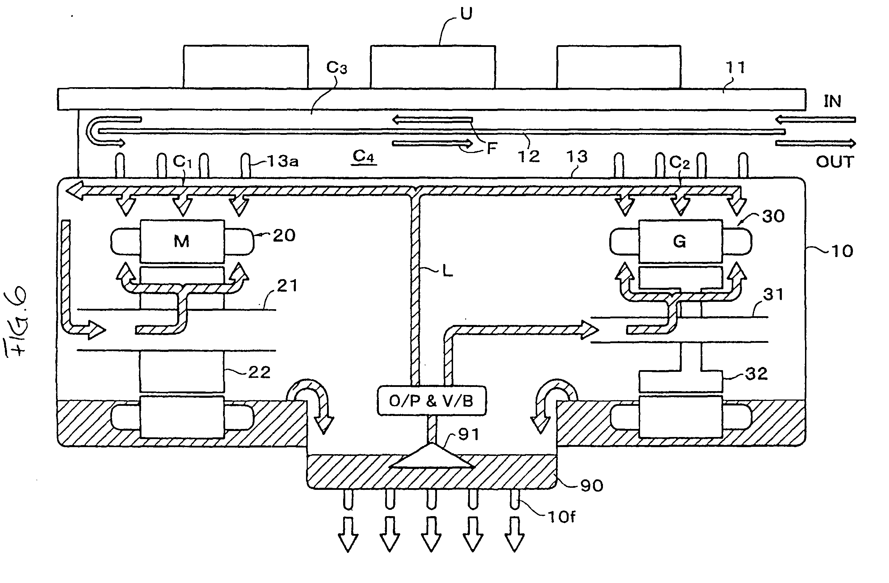

Fig. 6 shows the cooling system of the drive unit schematically and conceptually including the upper and lower positional relationship. This cooling system is formed by a circulation passage L (shown by the wide arrows with hatching in the figure) utilizing oil as the first coolant and a flow passage F (shown by white arrows with fine outline) utilizing cooling water as the second coolant. The oil as the first coolant is sucked up by the oil pump O/P from the oil sump 90 through the strainer 91, and cools the generator G and the motor M in the sequence as previously described, after which it is once stored in the bottom of the generator G accommodating portion and the bottom of the motor M accommodating portion of the drive unit case 10 so as to maintain a certain oil level that does not come into contact with the lowermost part of the rotors 22 and 32, and then the overflow portion is returned to the oil sump 90, thereby ending one cycle of circulation.

On the contrary, the cooling water as the second coolant constitutes a cooling system wherein the oil as the first coolant is cooled with a flow passage between the partition wall 11, made of an aluminum material having good heat conductivity similar to that of the drive unit case 10 and constituting a fixing portion of the inverter U as the uppermost wall integral with or independent from the drive unit case 10, and the wall 13 of the heat exchange portion (heat transfer wall whose concrete construction will be described in detail later) in the oil circulation passage L in the drive unit case 10. In this embodiment, isolating means 12 integral with the partition wall 11 or the drive unit case 10 or separate from either of them is provided between the partition wall 11 and the heat transfer wall 13. Further, there is adopted a construction such that the cooling water flow passage F cools the inverter U by the heat exchange through the partition wall 11 while flowing between the partition wall 11 and the isolating means 12, and the oil is cooled by the heat exchange with the oil through the heat transfer wall 13 while flowing between the isolating means 12 and the heat transfer wall 13 of the drive unit case 10.

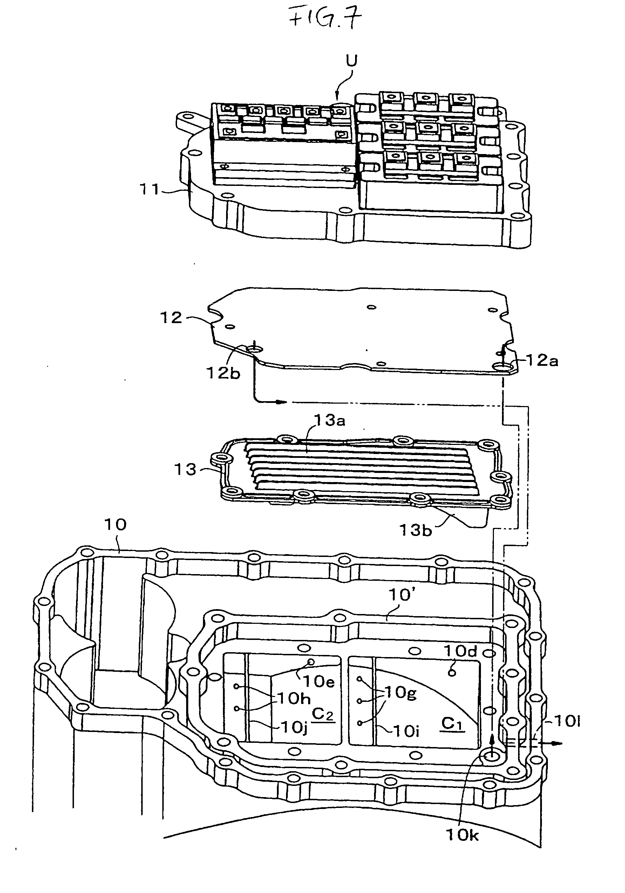

In this embodiment, referring to Fig. 7, there is adopted a joining structure of laying a flat plate shaped partition wall 11 on a surrounding wall 10' upwardly extending from the drive unit case 10 side, so that the cooling water flow passage F is substantially contained in the upper part on the drive unit case 10 side. However, this relation may be reversed to take such construction as to provide a surrounding wall extending downward from the surrounding of the partition wall 11, thereby constituting the partition wall 11 as a U-shaped sectional lid member open on the lower side and placing it on the upper part of the drive unit case 10, so that the flow passage F cooling water is substantially internally contained on the partition wall 11 side.

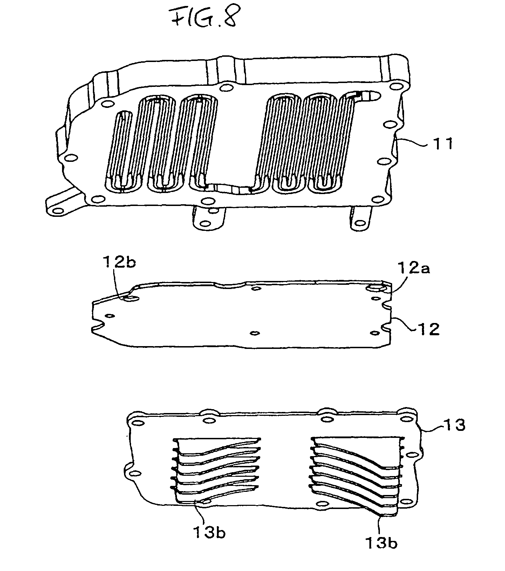

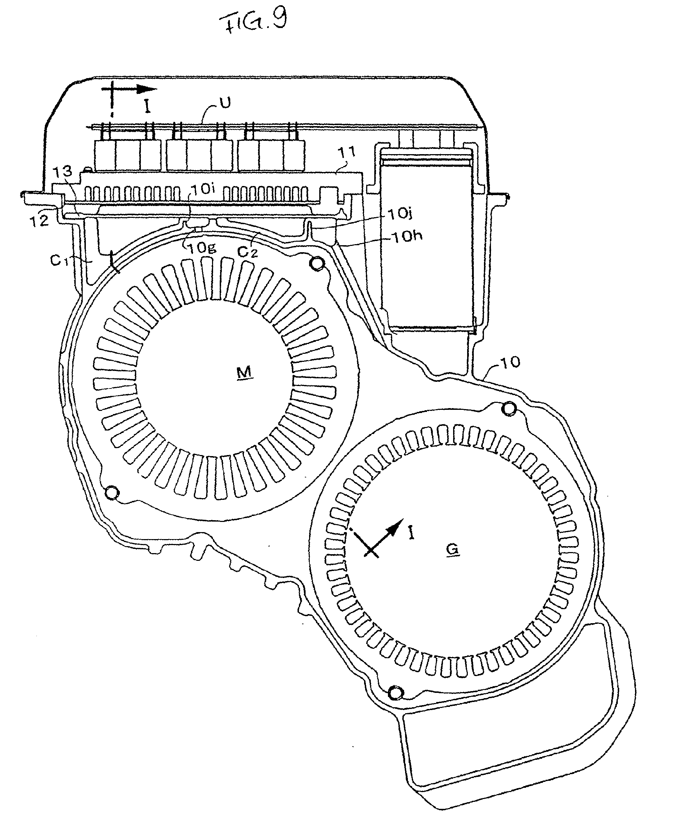

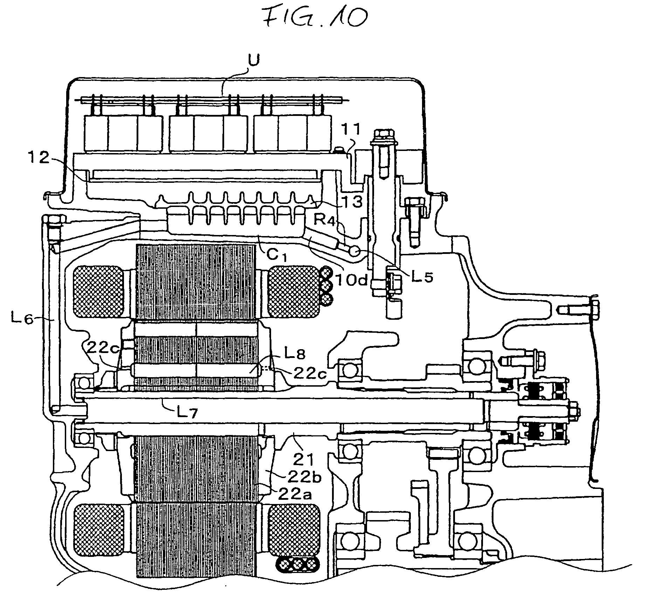

Fig. 7 is an exploded perspective view showing the connecting structure of the drive unit case 10 and a power module constituting the inverter U in the upper part of the drive unit case in detail, and Fig. 8 shows the same structure from a different viewpoint. Fig. 9 and Fig. 10 show the same structure cut in different sections. In this embodiment, the coolant containers C₁, C₂ are provided on the upper part of the motor accommodating portion in the drive unit case 10. The coolant container is divided into the coolant container C₁ for the motor and the coolant container C₂ for the generator. Halfway in the flow passage L₅ (see Fig. 4) for the first coolant leading to both of these coolant containers C₁, C₂, there are provided orifices R₄, R₅ having different apertures which distribute the feed distribution amounts of oil to both coolant containers C₁, C₂ according to the thermal loads of the motor M and the generator G, and those oil passages are open at inlets 10d, 10e on the sides of the coolant containers. Dams 10i, 10j are provided in positions near the outlet sides of both coolant containers. Further, downstream of the dams 10i, 10j of both coolant containers are formed oil outlets 10g, 10h which are open to the bottom faces of those coolant containers and which function as orifices for adjusting the discharge flow by the setting of the aperture.

As is illustrated by the subsequent course of passage of the first coolant in Fig. 10, the oil outlet 10g is connected to the intra-axial oil passage L₇ at the shaft end of the stator shaft 21 of the motor M, with the intra-case oil passage L₆ formed in the drive unit case utilized as the flow passage. The intra-axial oil passage L₇ is communicated with the peripheral groove formed in an end plate 22b supporting both ends of a core 22a of the motor M through the radial directional oil hole, passes through a plurality of intra-rotor oil passages L₈, of which both ends are communicated with the peripheral groove, and which are formed in the core 22a in the axial direction, and ends at a discharge hole 22c formed in the end plate 22b. In the drawing, both ends of one intra-rotor oil passage L₈ are shown leading to with the discharge hole 22c, but in detail, the construction is such that only one end of each intra-rotor oil passage L₈ is alternately led to the discharge hole 22c of the left and right end plates, thereby preventing an imbalance in the oil running in each rotor oil passage L₈. Also, the oil outlet 10h is led above the stator of the generator G through the intra-case oil passage, as shown in Fig. 9.

The heat transfer wall 13 of the drive unit case 10 which blocks the upper opening of the coolant containers C₁,C₂ and which forms the wall of the heat exchange portion is provided with a large number of cooling fins 13a, 13b on its upper face and lower face, and is constructed by the aluminum material or the like having good heat conductivity similar to the drive unit case 10. In this embodiment, the heat transfer wall 13 is an independent member from the drive unit case 10 for convenience of processing, and is fixed to the drive unit case 10 by bolts or the like. The oil cooling fin 13b on the lower face side of the heat transfer wall 13 change in height so as to follow the shape of the bottom part of the coolant containers C₁ and C₂, as shown in Fig. 9. The arrangement is such that the fins are positioned on the entire area of the coolant container C₁ so as to improve heat transfer.

The partition wall 11 provided with a power module constructing the inverter U constitutes a cooling portion of the inverter U. In this embodiment it is constructed so as to house a heat sink for improving the heat exchange efficiency. As seen in Fig. 8, it is provided with two narrow flow passages in parallel passing through the partition wall 11 turning back and forth. And, in order to run cooling water as the second coolant along this flow passage, in this embodiment there is provided isolating means 12 made of a material having high heat insulating property which is a separate member from the case or the partition wall is abutted with the lower face of the partition wall 11. Accordingly, as shown in Fig. 6, the first chamber C₃ facing the partition wall 11 side and the second chamber C₄ facing the drive unit case 10 side are separated and defined by the isolating means 12 between the partition wall 11 and the drive unit case 10, the chambers C₃, C₄ are connected through the through-hole 12b.

In the unit of such a construction, the oil fed to the coolant containers C₁, C₂ from the respective inlets 10d, 10e is obstructed by the respective dams 10i, 10j and stored for a certain duration of time, after which it flows in contact with the oil cooling fins 13b on the lower face side of the heat transfer wall 13 to affect sufficient heat exchange. Then, the portions which ran over the dams 10i, 10j are adjusted according to the amount of oil necessary for the motor M and the generator G and discharged from the outlets 10g, 10h. Meanwhile, the cooling water passes through a hole 12a of the isolating means 12 from an inlet 10k open on the upper face of the drive unit case 10 into the heat sink of the partition wall 11, i.e., the first chamber C₄, and heat exchange is sufficiently conducted through the passage therein. Then, the cooling water is led between the heat transfer wall 13 and the isolating means 12 through the through-hole 12b of the isolating means 12 where it runs across the heat transfer wall 13 while coming into contact with the water cooling fins 13a on the upper face side of the heat transfer wall 13. The cooling water is then led outside the drive unit case 10 from a cooling water outlet 101 formed in the surrounding wall around the opening of the coolant container. The cooling water discharged from the drive unit case 10 is cooled by the radiator for cooling the engine or the cooler for exclusive use and then re-circulated.

In this manner, according to the second embodiment described above, because the sequence is such that the cooling water first cools the power module constituting the inverter U through the partition wall 11 and then cools the motor M and the generator G through the oil, the cooling water does not conduct heat exchange directly with the motor M and the generator G or simultaneously with the inverter U. Therefore, it is possible to prevent the cooling water temperature from rising above the heat resistant temperature of the inverter U. Accordingly, it is possible to cool the inverter U, motor M, and generator G efficiently and improve cooling performance. Also, as the flow passage of cooling water is formed in the space between the integrated inverter U and the drive unit case 10, a complicated construction such as that of conventional technology in which an exclusive cooling channel is provided around the drive unit case can be avoided, thus leading to an improvement in space efficiency and a reduction in cost. Furthermore, by separating the coolant container into a coolant container C₁ for the motor and a coolant container C₂ for the generator, it becomes possible to individually adjust the amount of oil to be supplied to the electric motor M and the electric generator G, respectively, from the coolant container. Accordingly, by adjusting the flow ratio with the orifices R₄, R₅ having different apertures and supplying the proper amount of oil to the motor M and the generator G, the respective objects can be effectively cooled according to their cooling temperature requirements. Furthermore, as the oil after heat exchange in the coolant containers C₁, C₂ is led to the rotor side of the motor M and the generator G and also used for cooling from the inner periphery side by utilizing the oil discharged from the rotor by centrifugal force, it also becomes possible to further cool the stators 20, 30, such that highly efficient motor cooling can be conducted by utilizing oil circulation to the utmost extent.

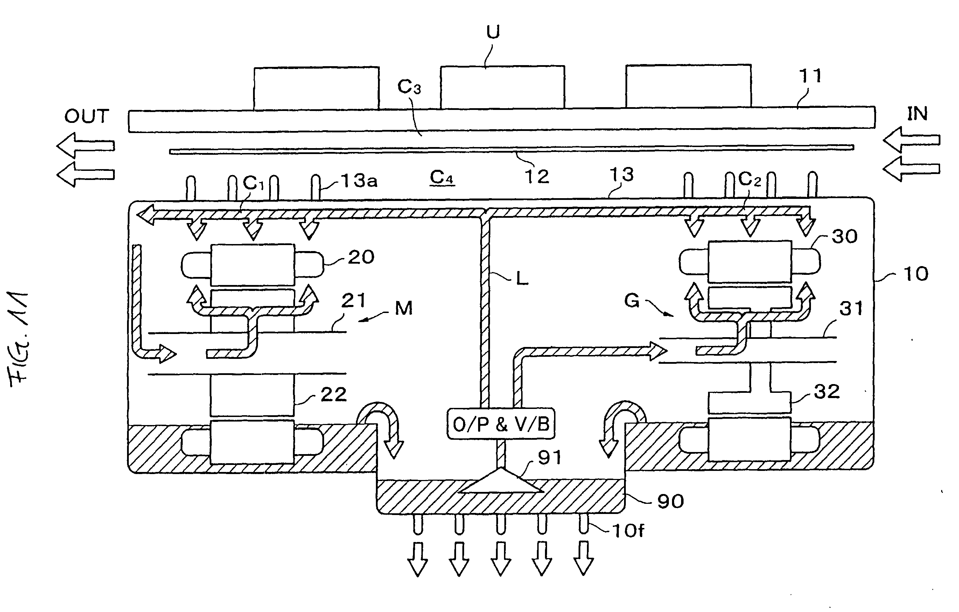

While in this second embodiment the flow of the cooling water as the second coolant is made in the up and down stream relationship which flows from the first chamber C₃ on the inverter U side to the second chamber C₄ side on the coolant container side by turning back, as seen most typically in Fig. 6, this stream may also be a parallel flow. Fig. 11 shows such third embodiment in the schematic view similar to that of Fig. 6. In this embodiment, the first chamber C₃ facing the partition wall 11 side and the circulation passage L for the first coolant side of the drive unit case 10, i.e., the second chamber C₄ facing the heat transfer wall 13, are divided up and down by the isolating means 12 and made into the flow passages connected in parallel with the circulation passage for second coolant. As the rest of construction is substantially the same as the second embodiment above, the corresponding members are indicated with the same numerals to be substituted for explanation (in this respect, same thing applies to subsequent embodiments).

When such a configuration is taken, it is possible to pass cooling water at a lower temperature to the second chamber C₄ side facing the heat transfer wall 13 of the coolant container, so that the cooling efficiency of the motor M and the generator G can be enhanced further.

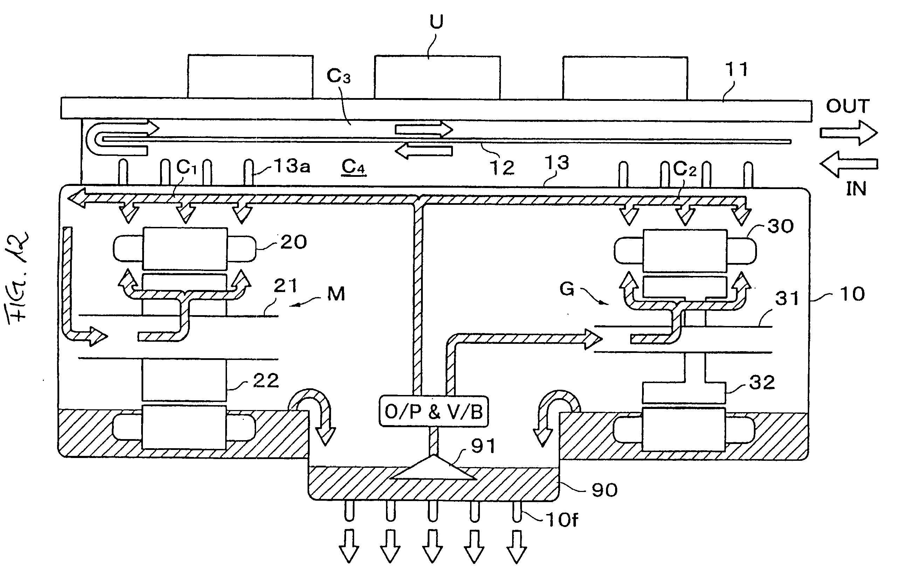

Next, Fig. 12 shows the fourth embodiment in which the upper and lower positions of the first chamber C₃ on the inverter U side and the second chamber C₄ on the coolant container side are reversed. In this embodiment, the cooling water as the second coolant firstly flows the side of the first coolant of the drive unit case 10, i.e., the side of the second chamber C₄ facing the heat transfer wall 13, and cools the oil through the heat transfer wall 13, followed by the first chamber C₃ facing the partition wall 11 side which is divided into the upper and the lower parts by the isolating means 12 to cool the power module of the inverter U.

Even in case that such a configuration is taken, the cooling structure is such that the cooling water as the second coolant does not directly cool the motor M and the generator G but cools the oil which circulatingly cools them and the inverter U sequentially, so that the heat from the motor M and the generator G is heat exchanged by the cooling water through the oil. Accordingly, heat is reduced with respect to direct heat transfer, and there is an advantage of preventing the temperature of the cooling water from rising above the heat resistant temperature of the inverter U.

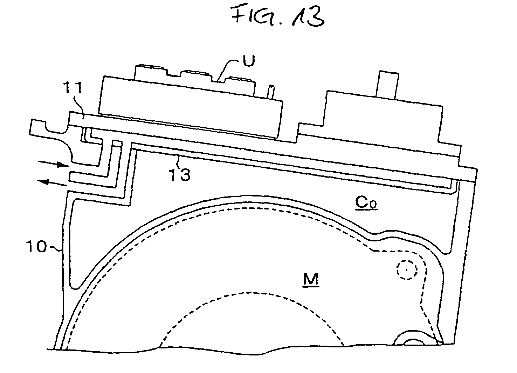

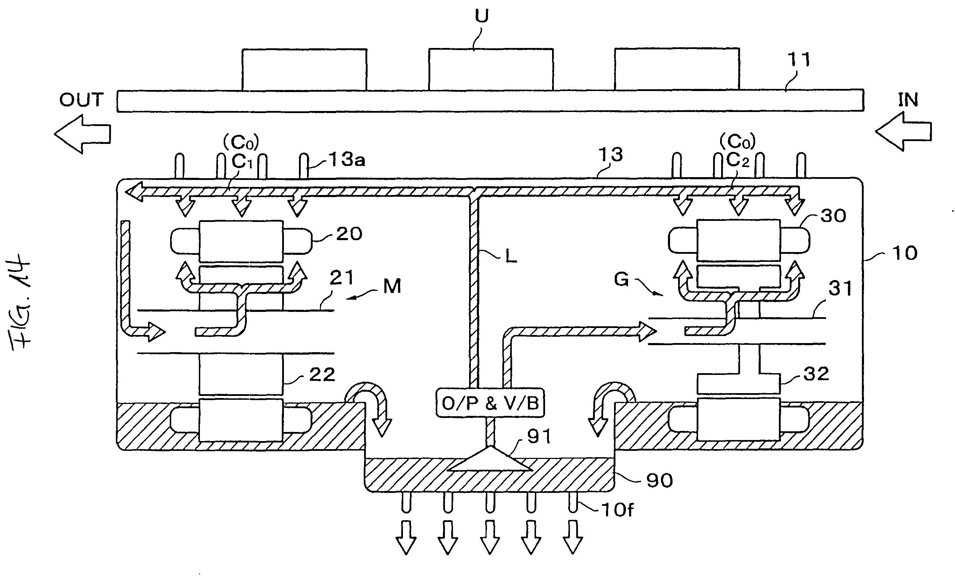

Next, Fig. 13 and Fig. 14 show schematically the fifth embodiment in which the idea of the present invention has been embodied with further simplification. In this embodiment, division of coolant container is eliminated so that there is a single coolant container C₀ so as to simplify the construction of the cooling water on the flow passage side by omitting the isolating means. The thus simplified construction is naturally applicable also to the drive unit in which the motor M and the generator G are provided separately as previously explained as the subjects of application of the second embodiment and which has a cooling system as shown in Fig. 14, but it is also applicable to the drive unit using the motor also as the generator.

When employing this type of construction, the heat transfer to the cooling water as the second coolant is conducted simultaneously on the inverter U side and the coolant container C₀ side of the oil as the first coolant. The heat from the motor M or the generator G or from both is reduced by heat exchange with cooling water through the oil in the coolant container C₀ with respect to direct heat transfer, such that the temperature of the cooling water can be prevented from rising above the heat resistant temperature of the inverter U. In addition, the oil circulating in the drive unit case 10 is, after cooling the motor M or the generator G or both, recovered underneath the drive unit case 10, where it is air-cooled and re-circulated. Therefore, by positioning the coolant container C₀ on the upstream side in the oil circulation passage, the oil immediately after the start of the circulation following air-cooling is further cooled by cooling water, thereby enabling the cooling performance of the motor M or the generator G to be improved. Accordingly, in this case as well, the inverter U and the motor M or the generator G, or all three of them can be cooled efficiently, such that cooling efficiency can be improved.

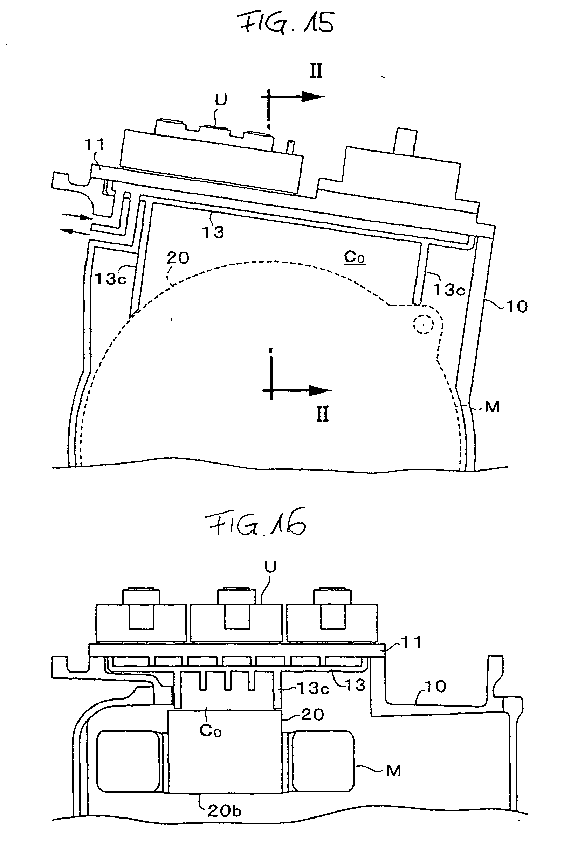

Whereas, in the respective embodiments above, configuration employed was such that the coolant containers C₀, C₁, and C₂ are made the spaces to be fixed by the drive unit case 10 and the heat transfer wall 13, another configuration may be employed with respect to this construction. Fig. 15 and Fig. 16 show the sixth embodiment adopting such construction. In this example, the coolant container C₀ has a construction in which it is defined by the stator 20 of the motor M without specifically interposing a sealing member, by utilizing the fact that the coolant is oil so that even if it leaks to the motor side, it should not cause any specific problem. In this case, particularly, with respect to the peripheral wall surrounding the coolant container C₀, acasewall similar to that of the second embodiment above may be adopted. However, in this embodiment, the wall is a surrounding wall 13c which extends downward from the heat transfer wall 13, and the bottom wall of the coolant container C₀ is an outer periphery of the core 20b of the stator 20 of the motor M. In this configuration as well, similar manner to the fifth embodiment, with respect to the flow passage of cooling water as the second coolant, the isolating means is omitted to simplify the construction so that the cooling water is in contact simultaneously with the partition wall 11 and the heat transfer wall 13. In this case as well, in terms of improving cooling efficiency, naturally it is possible to employ a cooling water flow passage construction similar to that of the second embodiment.

When this type of embodiment is adopted, the iron core, which forms the stator 20 of the motor M, and the oil come into direct contact without being mediated by the wall of the drive unit case 10, which is advantageous in that the motor M can be cooled more effectively. Also, when the surrounding wall 13c of the coolant container C₀ is formed with a heat transfer wall of a separate member, as described above, there is the advantage that the structure for circulating the oil in the drive unit case 10 can be further simplified.

Above, the present invention has been described in detail based on six embodiments. However, the present invention is not limited to these embodiments but can be implemented with various modifications of the specific construction within the scope of the matter described in the claims. For example, in each of the aforementioned embodiments, the second coolant is illustrated as cooling water but naturally other appropriate coolants may be used.

## Claims

1. A drive unit having an electric motor (M) and a circulation passage (L) for a first coolant for cooling said electric motor (M) in a drive unit case (10),
comprising:
a circulation passage (F) for a second coolant different from said circulation passage (L) for the first coolant is provided;
said circulation passage (F) for the second coolant has a heat exchange portion (C) with the circulation passage (L) for the first coolant;
the first coolant for cooling the electric motor (M) is cooled by the heat transferred to the second coolant at the heat exchange portion (C),
**characterized by**
an inverter (U) for controlling said electric motor (M), wherein the circulation passage (F) for the second coolant has a cooling portion (H) for cooling the inverter (U); and
the drive unit case (10) being provided with a partition wall (11) for fixing the inverter (U) to the case (10), constituting the cooling portion (H).

2. A drive unit according to claim 1, wherein said heat exchange portion (C) is disposed on the downstream side further than the cooling portion (H) of the inverter (U) in the circulation passage (F) for the second coolant.

3. A drive unit according to claim 1 or 2, wherein a flow passage for the second coolant is formed between said partition wall (11) and the circulation passage (L) for the first coolant, and the cooling portion (H) of the inverter (U) is used as the partition wall (11).

4. A drive unit according to one of the preceding claims, wherein isolating means (12) for defining a first chamber (C3) facing the partition wall side and for defining a second chamber (C4) facing the circulation passage side for the first coolant in said flow passage for the second coolant, and
the first chamber (C3) and the second chamber (C4) are mutually communicated an upstream side of the circulation passage (F) for the second coolant being the first chamber (C3) and a downstream side thereof being the second chamber (C4).

5. A drive unit according to one of claims 1-3, wherein isolating means (12) for defining the first chamber (C3) facing the partition wall side and the second chamber (C4) facing the circulation passage side for the first coolant is provided in said flow passage for the second coolant, and
the first chamber (C3) and the second chamber (C4) are connected in parallel to the circulation passage (F) for second coolant.

6. A drive unit according to one of the preceding claims comprising an electric generator (G) and a circulation passage (L) for the first coolant for cooling the electric generator (G) in a drive unit case (10), and further comprising an inverter (U) for controlling the electric generator (G), wherein said inverter (U) is fixed to the partition wall (11).

7. A drive unit according to one of the preceding claims, wherein said drive unit case (10) has a coolant container (C1, C2) for the first coolant in a position facing the flow passage for the second coolant.

8. A drive unit according to claim 7, wherein said coolant container (C1, C2) is divided into one for an electric motor (M) and one for an electric generator (G).

9. A drive unit according to claim 8, wherein an orifice for distributing a supply proportion to both coolant containers (C1, C2) is provided in the flow passage for the first coolant leading to the coolant container (C1) for said electric motor (M) and to the coolant container (C2) for said electric generator (G).

10. A drive unit according to one of claims 7 to 9, wherein said coolant container (C1, C2) has a dam (10j, 10i) in the vicinity of an outlet (10h, 10g) thereof.

11. A drive unit according to one of claims 7 to 10, wherein said coolant container (C1, C2) is defined by a stator (20, 30) of the electric motor (M) or the electric generator (G).

12. A drive unit according to one of claims 7 to 11, wherein said circulation passage (L) for the first coolant has a flow passage (L8) passing through a rotor of the electric motor (M) downstream of the coolant container (C1, C2), and the flow passage (L8) is terminated at a discharge hole (22c) provided in the rotor.

## Patentansprüche

1. Antriebseinheit, die einen Elektromotor (M) und eine Zirkulationspassage (L) für ein erstes Kühlmittel zum Kühlen des Elektromotors (M) in einem Antriebseinheitsgehäuse (10) hat, mit:
einer Zirkulationspassage (F) für ein zweites Kühlmittel, die anders ist als die Zirkulationspassage (L) für das erste Kühlmittel;
wobei die Zirkulationspassage (F) für das zweite Kühlmittel einen Wärmetauschabschnitt (C) mit der Zirkulationspassage (L) für das erste Kühlmittel hat;
das erste Kühlmittel zum Kühlen des Elektromotors (M) durch die Wärme gekühlt wird, die zu dem zweiten Kühlmittel bei dem Wärmetauschabschnitt (C) übertragen wird,
**gekennzeichnet durch**
einen Inverter (U) zum Steuern des Elektromotors (M), wobei die Zirkulationspassage (F) für das zweite Kühlmittel einen Kühlabschnitt (H) zum Kühlen des Inverters (U) hat; und
wobei das Antriebseinheitsgehäuse (10) mit einer Trennwand (11) zum Fixieren des Inverters (U) an dem Gehäuse (10) vorgesehen ist, die den Kühlabschnitt (H) bildet.

2. Antriebseinheit gemäß Anspruch 1, wobei der Wärmetauschabschnitt (C) weiter stromabwärts als der Kühlabschnitt (H) des Inverters (U) in der Zirkulationspassage (F) für das zweite Kühlmittel angeordnet ist.

3. Antriebseinheit gemäß Anspruch 1 oder 2, wobei eine Strömungspassage für das zweite Kühlmittel zwischen der Trennwand (11) und der Zirkulationspassage (L) für das erste Kühlmittel ausgebildet ist, und der Kühlabschnitt (H) des Inverters (U) als die Trennwand (11) verwendet wird.

4. Antriebseinheit gemäß einem der vorhergehenden Ansprüche, wobei eine Isoliereinrichtung (12) zum Definieren einer ersten Kammer (C3), die einer Seite der Trennwand gegenüberliegt, und zum Definieren einer zweiten Kammer (C4), die einer Seite der Zirkulationspassage für das erste Kühlmittel gegenüberliegt, in der Strömungspassage für das zweite Kühlmittel vorgesehen ist, und
wobei die erste Kammer (C3) und die zweite Kammer (C4) gegenseitig bei einer stromaufwärtigen Seite der Zirkulationspassage (F) für das zweite Kühlmittel, die die erste Kammer (C3) ist, und einer stromabwärtigen Seite von dieser, die die zweite Kammer (C4) ist, verbunden sind.

5. Antriebseinheit gemäß einem der Ansprüche 1 bis 3, wobei eine Isoliereinrichtung (12) zum Definieren der ersten Kammer (C3), die einer Seite der Trennwand gegenüberliegt, und der zweiten Kammer (C4), die einer Seite der Zirkulationspassage für das erste Kühlmittel gegenüberliegt, in der Strömungspassage für das zweite Kühlmittel vorgesehen ist, und die erste Kammer (C3) und die zweite Kammer (C4) parallel zu der Zirkulationspassage (F) für das zweite Kühlmittel verbunden sind.

6. Antriebseinheit gemäß einem der vorhergehenden Ansprüche mit einem elektrischen Generator (G) und einer Zirkulationspassage (L) für das erste Kühlmittel für ein Kühlen des elektrischen Generators (G) in einem Antriebseinheitsgehäuse (10), und des Weiteren mit einem Inverter (U) zum Steuern des elektrischen Generators (G), wobei der Inverter (U) an der Trennwand (11) fixiert ist.

7. Antriebseinheit gemäß einem der vorgehenden Ansprüche, wobei das Antriebseinheitsgehäuse (10) einen Kühlmittelbehälter (C1, C2) für das erste Kühlmittel in einer Position hat, die der Strömungspassage für das zweite Kühlmittel gegenüberliegt.

8. Antriebseinheit gemäß Anspruch 7, wobei der Kühlmittelbehälter (C1, C2) in einen für einen Elektromotor (M) und einen für einen elektrischen Generator (G) unterteilt ist.

9. Antriebseinheit gemäß Anspruch 8, wobei eine Öffnung zum Verteilen eines Zuführanteils zu beiden Kühlmittelbehältern (C1, C2) in der Strömungspassage für das erste Kühlmittel vorgesehen ist, die zu dem Kühlmittelbehälter (C1) für den Elektromotor (M) und zu dem Kühlmittelbehälter (C2) für den elektrischen Generator (G) führt.

10. Antriebseinheit gemäß einem der Ansprüche 7 bis 9, wobei der Kühlmittelbehälter (C1, C2) einen Damm (10j, 10i) in der Umgebung eines Auslasses (10h, 10g) von sich hat.

11. Antriebseinheit gemäß einem der Ansprüche 7 bis 10, wobei der Kühlmittelbehälter (C1, C2) durch einen Stator (20, 30) des Elektromotors (M) oder des elektrischen Generators (G) definiert ist.

12. Antriebseinheit gemäß einem der Ansprüche 7 bis 11, wobei die Zirkulationspassage (L) für das erste Kühlmittel eine Strömungspassage (L8) hat, die durch einen Rotor des Elektromotors (M) stromabwärts des Kühlmittelbehälters (C1, C2) hindurchgeht, und wobei die Strömungspassage (L8) bei einem Auslassloch (22c) endet, das in dem Rotor vorgesehen ist.

## Revendications

1. Unité de commande ayant un moteur électrique (M) et un conduit de circulation (L) pour un premier liquide de refroidissement destiné à refroidir ledit moteur électrique (M) dans un boîtier d'unité de commande (10), comprenant :
un conduit de circulation (F) pour un deuxième liquide de refroidissement différent dudit conduit de circulation (L) pour le premier liquide de refroidissement est fourni ;
ledit conduit de circulation (F) pour le deuxième liquide de refroidissement a une partie d'échange de chaleur (C) avec le conduit de circulation (L) pour le premier liquide de refroidissement ;
le premier liquide de refroidissement destiné à refroidir le moteur électrique (M) est refroidi par la chaleur transférée au deuxième liquide de refroidissement au niveau de la partie d'échange de chaleur (C),
**caractérisée par**
un inverseur (U) destiné à contrôler ledit moteur électrique (M), le conduit de circulation (F) pour le deuxième liquide de refroidissement ayant une partie de refroidissement (H) destinée à refroidir l'inverseur (U) ; et
le boîtier d'unité de commande (10) étant muni d'une cloison de séparation (11) destinée à fixer l'inverseur (U) au boîtier (10), constituant la partie de refroidissement (H).

2. Unité de commande selon la revendication 1, dans laquelle ladite partie d'échange de chaleur (C) est disposée du côté de l'aval plus loin que la partie de refroidissement (H) de l'inverseur (U) dans le conduit de circulation (F) pour le deuxième liquide de refroidissement.

3. Unité de commande selon la revendication 1 ou 2, dans laquelle un conduit d'écoulement pour le deuxième liquide de refroidissement est formé entre ladite cloison de séparation (11) et le conduit de circulation (L) pour le premier liquide de refroidissement, et la partie de refroidissement (H) de l'inverseur (U) fait office de cloison de séparation (11).

4. Unité de commande selon l'une des revendications précédentes, dans laquelle un moyen isolant (12) destiné à délimiter une première chambre (C3) faisant face au côté de la cloison de séparation et destiné à délimiter une deuxième chambre (C4) faisant face au côté du conduit de circulation pour le premier liquide de refroidissement dans ledit conduit d'écoulement pour le deuxième liquide de refroidissement, et
la première chambre (C3) et la deuxième chambre (C4) sont mises mutuellement en communication, un côté de l'amont du conduit de circulation (F) pour le deuxième liquide de refroidissement étant la première chambre (C3) et un côté de l'aval de celui-ci étant la deuxième chambre (C4).

5. Unité de commande selon l'une des revendications 1 à 3, dans laquelle le moyen isolant (12) destiné à délimiter la première chambre (C3) faisant face au côté de la cloison de séparation et la deuxième chambre (C4) faisant face au côté du conduit de circulation pour le premier liquide de refroidissement est fourni dans ledit conduit d'écoulement pour le deuxième liquide de refroidissement, et
la première chambre (C3) et la deuxième chambre (C4) sont reliées parallèlement au conduit de circulation (F) pour le deuxième liquide de refroidissement.

6. Unité de commande selon l'une des revendications précédentes, comprenant un générateur électrique (G) et un conduit de circulation (L) pour le premier liquide de refroidissement destiné à refroidir le générateur électrique (G) dans un boîtier d'unité de commande (10), et comprenant en outre un inverseur (U) destiné à contrôler le générateur électrique (G), ledit inverseur (U) étant fixé à la cloison de séparation (11).

7. Unité de commande selon l'une des revendications précédentes, dans laquelle ledit boîtier d'unité de commande (10) a un conteneur à liquide de refroidissement (C1, C2) pour le premier liquide de refroidissement dans une position faisant face au conduit d'écoulement pour le deuxième liquide de refroidissement.

8. Unité de commande selon la revendication 7, dans laquelle ledit conteneur à liquide de refroidissement (C1, C2) est divisé en un pour un moteur électrique (M) et un pour un générateur électrique (G).

9. Unité de commande selon la revendication 8, dans laquelle un orifice destiné à distribuer une proportion d'approvisionnement aux deux conteneurs à liquide de refroidissement (C1, C2) est fourni dans le conduit d'écoulement pour le premier liquide de refroidissement menant au conteneur à liquide de refroidissement (C1) pour ledit moteur électrique (M) et au conteneur à liquide de refroidissement (C2) pour ledit générateur électrique (G).

10. Unité de commande selon l'une des revendications 7 à 9, dans laquelle ledit conteneur à liquide de refroidissement (C1, C2) a un seuil (10j, 10i) à proximité d'une sortie (10h, 10g) de celui-ci.

11. Unité de commande selon l'une des revendications 7 à 10, dans laquelle ledit conteneur à liquide de refroidissement (C1, C2) est délimité par un stator (20, 30) du moteur électrique (M) ou du générateur électrique (G).

12. Unité de commande selon l'une des revendications 7 à 11, dans laquelle ledit conduit de circulation (L) pour le premier liquide de refroidissement a un conduit d'écoulement (L8) passant à travers un rotor du moteur électrique (M) en aval du conteneur à liquide de refroidissement (C1, C2), et le conduit d'écoulement (L8) s'arrête au niveau d'un trou de décharge (22c) fourni dans le rotor.
